# EUROPEAN PATENT SPECIFICATION

(11) **EP 3 593 251 B1**
(45) Date of publication and mention of the grant of the patent: **24.11.2021**
(21) Application number: 17711127.5
(22) Date of filing: 14.03.2017
(51) Int. Cl.: G06F 12/02, G06F 12/08

(54) **SYSTEMS AND METHODS FOR MANAGING DYNAMIC RANDOM ACCESS MEMORY (DRAM)**
SYSTEME UND VERFAHREN ZUR VERWALTUNG EINES DYNAMISCHEN DIREKTZUGRIFFSSPEICHERS (DRAM)
SYSTÈMES ET PROCÉDÉS DESTINÉS À LA GESTION DE MÉMOIRE DYNAMIQUE À ACCÈS ALÉATOIRE (DRAM)

(43) Date of publication of application: 15.01.2020
(73) Proprietor: Huawei Technologies Co., Ltd., Longgang District Shenzhen, Guangdong 518129 (CN)
(72) Inventor: KOKKONEN, Jani, 80992 Munich (DE)
(74) Representative: Gill Jennings & Every LLP
(86) International application number: PCT/EP2017/055959
(87) International publication number: WO 2018/166583

(56) References cited:
- CN-A- 104 166 624
- US-A1- 2012 246 320
- US-A1- 2013 232 486
- US-A1- 2014 089 725
- US-A1- 2014 189 195

## Description

### BACKGROUND

The present invention, in some embodiments thereof, relates to dynamic random access memory (DRAM) and, more specifically, but not exclusively, to methods and systems for managing DRAM.

In modern memory systems the access to DRAM is controlled by the memory controller. DRAM is divided into a hierarchy of channel, bank, rank, row, and column in order to improve throughput and performance. The memory controller uses a specified subset of bits of a physical address to select the channel, rank, bank, row, and column. The memory algorithm used in memory controllers is typically configured by system firmware and is therefore tedious to change. Hardware capabilities of the memory controller also set limits on possible implementation options.

US 2014/089725 A1 discloses a memory management method according to which specific address ranges are assigned to specific processing entities whereby the memory fault becomes restricted to a subset of processing entities within the multiple processing entities so as to minimise the effect of a memory fault on the computing environment. Memory allocation to the virtual machines is performed on the virtual machine image level.

### SUMMARY

It is an object of the present invention to provide an apparatus and a method for managing dynamic random access memory (DRAM).

The foregoing and other objects are achieved by the features of the independent claims. Further implementation forms are apparent from the dependent claims, the description and the figures.

According to a first aspect, an apparatus for managing dynamic random access memory (DRAM) is provided, the apparatus comprising: a processor configured to map each cluster of a plurality of clusters of banks of the DRAM, to each application of a plurality of applications executing on a common virtual machine (VM) running on a host operating system (OS) of a host computing device, wherein each cluster of banks is used exclusively by each mapped application.

In a first possible implementation of the apparatus according to the first aspect, the processor is configured to execute a hypervisor that runs the common VM, wherein the hypervisor is configured to perform the mapping of each cluster of the plurality of clusters of banks of the DRAM by translating the mapping of each cluster of the plurality of clusters of the DRAM to physical addresses that are provided to a memory controller controlling the DRAM.

The mapping is performed using software, which provides for integration with an existing memory controller implemented in hardware. Mapping using software provides for rapid and easy deployment in existing computing devices.

According to a second aspect, a method of managing dynamic random access memory (DRAM) is provided, the method comprising: mapping each cluster of a plurality of clusters of banks of the DRAM, to each application of a plurality of applications executing on a common virtual machine (VM) running on a host operating system (OS) of a host computing device, wherein each cluster of banks is used exclusively by each mapped application.

The apparatus according to the first aspect, and/or the method according to the second aspect described herein address the technical problem of avoiding or reducing contention in memory banks of the DRAM, in particular, for applications executing on a common virtual machine (VM). Each application executing on the common VM is mapped to a cluster of banks designated for exclusive use by the mapped application, in comparison, for example, to the BPM (Bank-level Partition Mechanism) method that consider the common VM as a single executing application. Methods such as BPM assign banks of DRAM to the common VM without consideration of the individual application executing on the common VM, which may lead to contention by the applications running on the common VM.

The computational performance improvements arise from reducing or preventing memory contention, and/or reducing or preventing memory controller swaps which is a computationally costly operation.

The computational performance improvement is obtained in the host OS side and/or the guest OS side.

In a first possible implementation of the method according to the second aspect, the mapping comprises mapping guest physical addresses used by a hypervisor hosting the common VM to physical addresses of the DRAM controlled by a memory controller.

The mapping is performed using software, which provides for integration with an existing memory controller implemented in hardware. Mapping using software provides for rapid and easy deployment in existing computing devices.

In a second possible implementation form of the apparatus according to the preceding first implementation form of the first or second aspects, the hypervisor is configured to map guest physical addresses used by the hypervisor to physical addresses of the DRAM controlled by the memory controller.

In a third possible implementation form of the apparatus according to the first aspect as such or the method according to the second aspect as such, or according to any of the preceding forms of the first or second aspects, the processor is further configured to or the method further comprises allocate another group of clusters of the plurality of clusters of banks of the DRAM to a second VM running on the host OS of the host computing device, wherein the second VM maps each member of the group of clusters to each application of a plurality of applications executing on the second VM, wherein each member of the group of clusters defines banks of the DRAM for exclusive use by each mapped application executing on the second VM.

Each VM may independently perform mapping of its assigned clusters to the applications running on the respective VM, which improves overall memory performance and/or computational performance.

In a fourth possible implementation form of the apparatus according to the first aspect as such or the method according to the second aspect as such, or according to any of the preceding forms of the first or second aspects, the processor is further configured to or the method further comprises uniquely map clusters of banks of the DRAM to each application of a plurality of applications executing on each VM of a plurality of VM running on the host OS of the host computing device, wherein each application executing on each VM of the plurality of VM has exclusive use of the mapped cluster.

The unique assignment of clusters to each application of each VM prevents or reduces memory contention between applications of the same VM and applications of different VM.

In a fifth possible implementation form of the apparatus according to the first aspect as such or the method according to the second aspect as such, or according to any of the preceding forms of the first or second aspects, the processor is further configured to or the method further comprises map clusters of banks to applications of the VM according to a scheduling policy.

The scheduling policy may be selected for the computational environment to further improve computational performance.

In a sixth possible implementation form of the apparatus according to the first aspect as such or the method according to the second aspect as such, or according to any of the preceding forms of the first or second aspects, the processor is further configured to or the method further comprises select the same location of bits indicative of the clusters of banks from the guest physical addresses used by the common VM that are used by the host OS from the actual physical addresses.

In a seventh possible implementation form of the apparatus according to the first aspect as such or the method according to the second aspect as such, or according to any of the preceding forms of the first or second aspects, the processor is further configured to or the method further comprises: detect, by the host OS, a virtual memory page fault associated with a certain application of the plurality of applications executing on the common VM, identify the cluster of banks mapped to the certain application, and allocate at least one additional physical memory page to the certain application from the mapped cluster of banks.

Clusters selected at the VM side are enforceable at the hypervisor side. Cluster selection is performed at the VM side using clusters assigned to the application, which allows the hypervisor side to figure out the desired cluster from the faulting guest physical address and associated cluster bits.

In an eighth possible implementation form of the apparatus or the method according to the preceding seventh forms of the first or second aspects, the processor is further configured to or the method further comprises: allocate at least one additional virtual memory page to the certain application from one of a plurality of default clusters of banks allocated to the common VM when an invalid cluster of banks is identified as mapped to the certain application.

In a ninth possible implementation form of the apparatus or the method according to the preceding seventh or eighth forms of the first or second aspects, the cluster of banks mapped to the certain application is identified by checking the bits indicative of the cluster of banks in the guest physical address.

The bits of the guest physical address may be accessed by the hypervisor to determine the guest physical address and associated cluster.

In a tenth possible implementation form of the apparatus or the method according to the preceding seventh or eighth forms of the first or second aspects, the cluster of banks mapped to the certain application is identified by checking at least one of: HPFAR register, CR2 register, and CR3 register.

The bits of the registers may be accessed by the hypervisor to determine the guest physical address and associated cluster.

In an eleventh possible implementation form of the apparatus according to the first aspect as such or the method according to the second aspect as such, or according to any of the preceding forms of the first or second aspects, at least one application of the plurality of applications is mapped to a plurality of clusters of banks of the DRAM, wherein the plurality of clusters of banks are used exclusively by the mapped at least one application.

Applications requiring a large amount of memory may be mapped to two or more clusters, for example, rather than mapping to a single cluster, which improves computational performance by providing the application with sufficient memory rather than experiencing errors due to insufficient memory.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic of dataflow in a computing system implementing the BPM method while running two applications on a common VM, to help in understanding the addressed technical problem, in accordance with some embodiments of the present invention;
FIG. 2 is a schematic depicting an example of selection of bank bits by a memory controller, to help in understanding the addressed technical problem, in accordance with some embodiments of the present invention;
FIG. 3 is a schematic depicting allocation of DRAM banks to applications by the BPM method, to help understand the addressed technical problem, in accordance with some embodiments of the present invention;
FIG. 4 is a flowchart of a method that manages DRAM by mapping clusters of banks of the DRAM to each application executing on a VM, in accordance with some embodiments of the present invention;
FIG. 5 is a block diagram of a system that includes an apparatus implemented as a computing device that stores cluster mapping code that communicates with a memory controller to manage DRAM, in accordance with some embodiments of the present invention;
FIG. 6 is a schematic depicting the described Qemu/KVM command line options, in accordance with some embodiments of the present invention;
FIG. 7 is a flowchart depicting page fault handing using other methods that do not consider applications executing on a VM, to help understand implementations of the present invention;
FIG. 8 is a flowchart depicting page fault handling by a computing device, which takes into account applications running on VMs, in accordance with some embodiments of the present invention; and
FIG. 9 is a schematic depicting an exemplary mapping between Guest Virtual Addresses and Physical Addresses during a Linux kernel booting phase, in accordance with some embodiments of the present invention; and
FIG. 10 is a schematic depicting an exemplary mapping between Guest Virtual Addresses of a Guest Virtual Address Page and Physical Addresses during an application launch phase, in accordance with some embodiments of the present invention.

### DETAILED DESCRIPTION

The present invention, in some embodiments thereof, relates to dynamic random access memory (DRAM) and, more specifically, but not exclusively, to methods and systems for managing DRAM.

An aspect of some embodiments of the present invention relate to a system, and apparatus, and a method that maps clusters of banks of the DRAM to applications executing on a common virtual machine (VM) running on a host operating system (OS) of a host computing device. Each cluster of banks is used exclusively by each mapped application.

A hypervisor that runs the common VM performs the mapping of the clusters of banks of the DRAM, by translating the mapping of each cluster to physical addresses that are provided to a memory controller controlling the DRAM. The hypervisor maps guest physical addresses used by the VM to physical addresses of the DRAM controlled by the memory controller.

When multiple VMs are running on the host OS of the host computing device, one or more clusters of banks of the DRAM are mapped to each application executing on each VM. Each application executing on each VM has exclusive use of the mapped cluster.

The apparatus, system, and/or methods (e.g., code instructions stored in a data storage device executed by one or more processors) described herein address the technical problem of avoiding or reducing contention in memory banks of the DRAM, in particular, for applications executing on a common virtual machine (VM). Each application executing on the common VM is mapped to a cluster of banks designated for exclusive use by the mapped application, in comparison, for example, to the BPM (Bank-level Partition Mechanism) method that consider the common VM as a single executing application. Methods such as BPM assign banks of DRAM to the common VM without consideration of the individual application executing on the common VM, which may lead to contention by the applications running on the common VM. The computational performance improvement is obtained in the host OS side and/or the guest OS side.

A brief discussion of other memory management methods is now provided, to help understand the technical problem addressed herein. To avoid contention in memory banks, physical addresses are distributed evenly over the whole available physical address range when implemented by other methods. In such implementations, the memory controller tries to maximize the DRAM utilization, but as a side affect it causes unpredictability for application performance. Applications are allowed to access all memory banks which leads to contention when several applications are accessing the same memory banks in parallel. Such a situation may occur, for example, with multiprocessor systems when several applications are executed in parallel. In such a case, the memory controller swaps in the relevant memory bank content for each application that is accessing the same memory bank. Changing memory bank content is a costly operation compared to the case when the same application accesses the same memory bank repeatedly, since new memory content is loaded on the bank for each application. In contrast, the systems, apparatus, and/or methods described herein reduce or prevent contention by mapping applications of a common VM to use different memory banks of the DRAM.

The BPM method cannot be implemented in a virtual environment. The BPM method considers the VM as a whole, and cannot identify and consider separate applications running on the VM. The BPM method is inoperable when a guest operating system (OS) tries to use bank clustering (termed *coloring* when used in reference to the BPM method) for applications executed on the guest OS, since the memory controller works only with physical addresses whereas the VM uses guest physical addresses which are not understood by the memory controller. In practice, the guest physical addresses are a single process Virtual Address (VA) space. The VM is treated as a single process, which effectively means that once the host OS launches a new VM (i.e., a new single process) and selects bank color for the process based on the BPM method then all applications running on the VM are mapped on same bank color regardless of the bank colors used by the guest OS.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The BPM method is now described in additional detail as an aid in understanding the technical problem addressed by the systems, apparatus, and/or methods (e.g., code instructions stored in a data storage device executed by one or more processors) described herein. BPM uses a software (SW) test program to determine used physical address bits in the memory controller and creates its own SW based model that exploits knowledge of the bank bits in order to allocate applications to exclusively use specified bank bits. In the BPM SW based model the memory pools in a buddy allocator are created such that each pool allocates memory pages only from specified memory banks as specified by the memory controller. When a new process is created with a new process ID, certain bank colors are assigned to it and stored into kernel process structures. When a page fault occurs the kernel identifies allocated bank colors from the process ID and provides the information to the buddy allocator which considers the assigned bank color bits when allocating physical memory pages for the process. When two applications are assigned to use different bank colors, the two applications cannot disturb each other's performance.

The BPM is designed for two or more applications executed by a standard operating system. The BPM method is inoperable (or is inefficient) when the two or more applications run on a common VM. The systems, apparatus, and/or methods described herein address the technical problem of reducing or preventing DRAM memory contention between two or more applications running on a common VM, while providing efficient DRAM operation (e.g., preventing or reducing memory swaps by the memory controller).

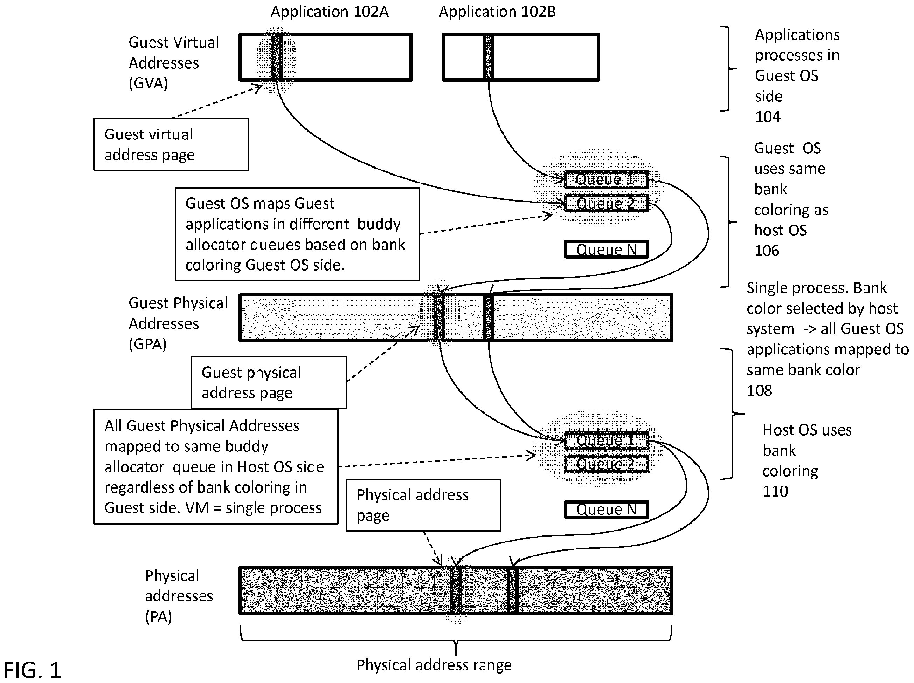

Reference is now made to FIG. 1, which is a schematic of dataflow in a computing system implementing the BPM method while running two applications on a common VM, to help in understanding the addressed technical problem, in accordance with some embodiments of the present invention. The technical problem relates to the host operating system (OS) being unaware that one or both host applications 102A-B are actually VM each running one or more of its own applications, since when BPM is implemented, for the host OS each VM is treated as a single application.

Applications 102A-B are running on a guest OS 104, which uses bank coloring for guest applications 102A-B. Guest OS 104 allocates guest physical pages in application page tables. At 106, the guest physical pages are selected based on coloring allocated for the guest application. Similarly, at 106, the Host OS uses bank coloring to allocate physical pages based on defined bank colors allocated to applications running on host system. At 108, guest OS applications 102A-B are mapped to a common bank color. As discussed, when BPM is implemented, the host OS is unaware that one or both host applications 102A-B are actually VM each running one or more of its own applications, since for the host OS each VM is treated as a single application. At 110, the physical memory controller maps pages on banks based on physical address bits and therefore the bank coloring for the VM applications is actually selected by the host OS and not by the Guest OS when BPM is implemented.

The systems, apparatus, and/or methods described herein address the above described technical problem by mapping applications running on a common VM to different memory banks. The mapping may be performed using a similar method to that of mapping applications running on the host OS, providing similar computations performance improvements. The computational performance improvements arise from reducing or preventing memory contention, and/or reducing or preventing memory controller swaps which is a computationally costly operation.

Additional details of the BPM method are now described. The BPM extends the Linux buddy allocator to take bank colors into account. The kernel uses a buddy system to manage the free physical pages, which are organized as different orders (0~11) of free lists. The BPM method modifies the original free list organization into a hierarchy, for each order of free page list, BPM re-organize the free pages to form 32 colored free lists according to the 5 bank bits. Each process has its own colors (i.e., a group of banks). When a page fault occurs, the OS kernel searches a colored free list and allocates a page for the process. The process is transparent to applications so that programmers do not necessarily need to modify programs. The basic operation of BPM is to read specified bits from physical address and use those bits to select the bank color.

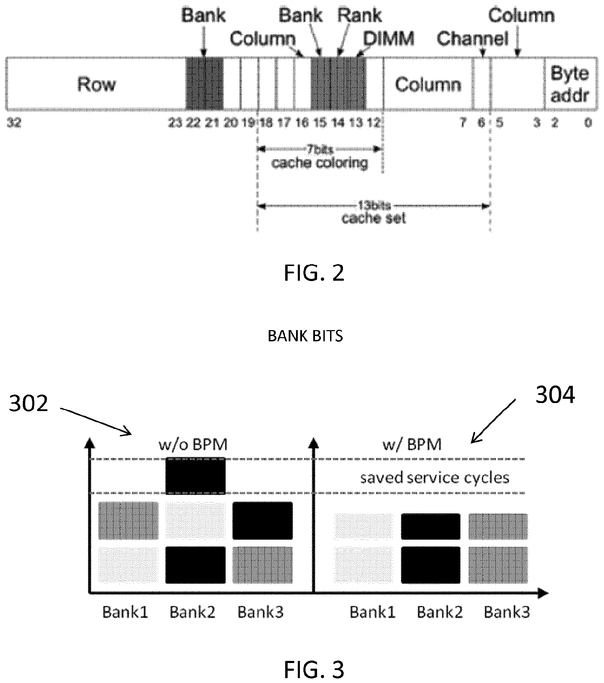

Reference is now made to FIG. 2, which is a schematic depicting an example of selection of bank bits by a memory controller, to help in understanding the addressed technical problem, in accordance with some embodiments of the present invention. In general, bytes in DRAM are addressable by physical addresses which consist of, for example, 32- bits or 64-bits (depending on CPU architecture). From the memory controller point of view some of the physical address bits have special meaning. For example, bank selection is done only based on certain bits in physical address. As depicted in the example of FIG. 2, a memory controller uses bits 22-21 and 14 to select the bank. Address bit 15 is used to select the channel. Effectively, memory controller in the case of FIG. 2 supports 2^3 = 8 banks and 2^1 = 2 channels. The actual bit pattern to select banks, rows, and channels is dependent on the specific hardware configuration implementation.

Reference is now made to FIG. 3, which is a schematic depicting allocation of DRAM banks to applications by the BPM method, to help understand the addressed technical problem, in accordance with some embodiments of the present invention. Schematic 302 depicts memory pages from different applications (each application is represented by a color: light grey, grey, and black) distributed to Bank 1, Bank 2, and Bank 3, using standard methods (i.e., without the BPM method). Each Bank is used by two different applications. Schematic 304 depicts assignment of each Bank to a single application based on the BPM method.

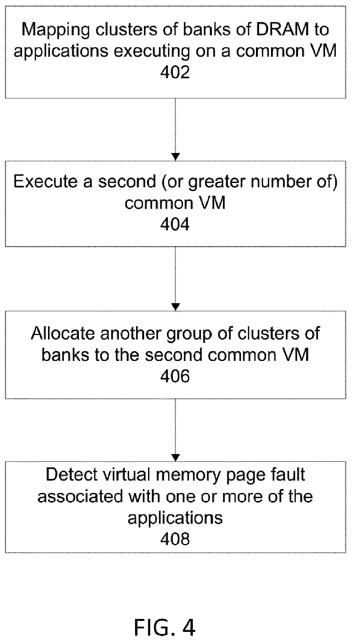

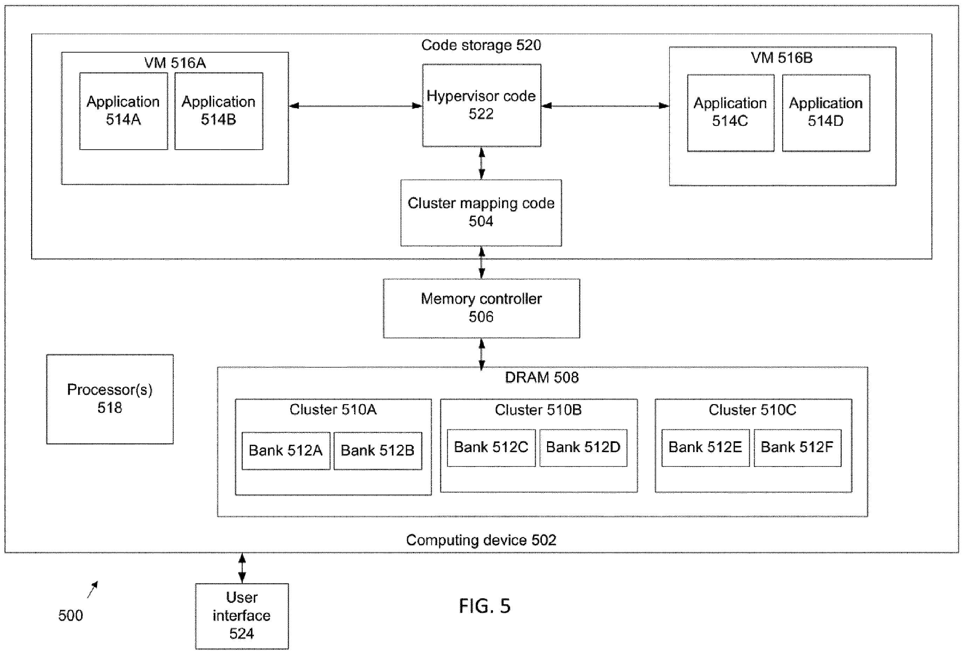

Reference is now made to FIG. 4, which is a flowchart of a method that manages DRAM by mapping clusters of banks of the DRAM to each application executing on a common VM, in accordance with some embodiments of the present invention. Reference is also made to FIG. 5, which is a block diagram of a system 500 that includes an apparatus implemented as a computing device 502 that stores cluster mapping code 504 that communicates with a memory controller 506 to manage DRAM 508, in accordance with some embodiments of the present invention. Cluster mapping code 504 maps clusters (two clusters 510A-B shown for clarity) of banks (four banks 512A-D shown for clarity) to each application (four applications 514A-D shown for clarity) executing on a common VM (two VM 516A-B shown for clarity). Cluster mapping code 504 implements the acts described with reference to FIG. 4 when executed by processor(s) 518 of computing device 502.

Computing device 502 may be implemented as, for example, one of more of: a single computing device (e.g., client terminal), a group of computing devices arranged in parallel, a network server, a web server, a storage server, a local server, a remote server, a client terminal, a mobile device, a stationary device, a kiosk, a smartphone, a laptop, a tablet computer, a wearable computing device, a glasses computing device, a watch computing device, and a desktop computer.

Computing device 502 includes one or more processor(s) 518, implemented as for example, central processing unit(s) (CPU), graphics processing unit(s) (GPU), field programmable gate array(s) (FPGA), digital signal processor(s) (DSP), application specific integrated circuit(s) (ASIC), customized circuit(s), processors for interfacing with other units, and/or specialized hardware accelerators. Processor(s) 518 may be implemented as a single processor, a multi-core processor, and/or a cluster of processors arranged for parallel processing (which may include homogenous and/or heterogeneous processor architectures). It is noted that processor(s) 518 may be designed to implement in hardware one or more features stored as cluster mapping code 504 (e.g., described herein as stored in a code storage device 520).

Code storage device(s) 520 stores code instructions implementable by processor(s) 518. Code storage device(s) 520 is implemented as, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Code storage device(s) 520 store hypervisor code 522 that runs one or more VM 516A-B. Each VM 516A-B may independently run one or more applications. For example, as shown VM 516A runs applications 514A-B, and VM 516B runs applications 514C-D.

Hypervisor code 522 communicates with cluster mapping code 504, for example, cluster mapping code 502 is implemented within hypervisor code 522 and/or is implemented as a library and/or function that is called by hypervisor code 522.

Cluster mapping code 504 communicates with a memory controller 506 that controls DRAM 508 to map clusters 510A-B of banks 512A-D, as described herein. Memory controller 506 may be implemented in hardware and/or software.

Computing device 502 may be in communication with a user interface 524 that presents data and/or includes a mechanism for entry of data, for example, one or more of: a touch-screen, a display, a keyboard, a mouse, voice activated software, and a microphone. User interface 524 may be used to configure parameters of the cluster mapping code 504, and/or view performance of the cluster mapping code 504.

Referring now back to FIG. 4, the acts of the method described with reference to FIG. 4 are executed by cluster mapping code 504, which is accessed and/or integrated with hypervisor code 522, executed by processor(s) 518 of computing device 502. Cluster mapping code 504 may be transparent to the applications running on the hypervisor, such that programmers may program the applications without consideration of cluster mapping code 504.

At 402, processor(s) 518 executing cluster mapping code 504 maps each cluster (e.g., 510A-B) of banks (e.g., 512A-D) of DRAM 508 to each application (e.g., 514A-B) executing on a common virtual machine (VM) (e.g., 516A) running on a host operating system (OS) of a host computing device 502. Each cluster of banks is used exclusively by each mapped application. For example, application 514A is mapped to cluster 510A and exclusively uses banks 512A-B, and application 514B is mapped to cluster 510B and exclusively uses banks 512C-D.

Optionally, one or more applications are mapped to two or more clusters of banks of the DRAM. The two or more clusters of banks are used exclusively by the mapped application(s). For example, application 514A may be mapped to clusters 510A and 510B, which provides application 514A with exclusive use of banks 512A-D of clusters 510A-B. Applications requiring a large amount of memory may be mapped to two or more clusters, for example, rather than mapping to a single cluster, which improves computational performance by providing the application with sufficient memory rather than experiencing errors due to insufficient memory.

Processor(s) 518 executes a hypervisor (implemented as hypervisor code 522) that runs common VM 516A. The hypervisor perform the mapping of each cluster of banks of DRAM 508 by translating the mapping of the clusters of DRAM 508 to physical addresses that are provided to memory controller 506 controlling DRAM 508.

The mapping is performed using software, which provides for integration with an existing memory controller implemented in hardware. Mapping using software provides for rapid and easy deployment in existing computing devices.

Hypervisor 522 maps guest physical addresses used by the hypervisor to physical addresses of DRAM 508 controlled by memory controller 506. The absolute physical address at the host OS side is not typically the same as the guest physical addresses in the VM. The host OS may use second level page tables to map guest physical addresses to host physical addresses. When an addressing scheme uses the same bank cluster bits (also referred to herein as bank color bits), for example as shows in FIG. 2, the host OS and guest OS may use the same bank cluster bits. The VM may select the same location of bank cluster bits from the guest physical addresses as the host OS selects from actual physical addresses. Bank cluster selection as shown in FIG. 2 is based on a specific subset of the address bits, not the whole address. The used bank cluster bits may be communicated to the VM kernel, for example, using a defined kernel command line parameter *bank-cluster-bits.*

The mapping of clusters of banks to applications of the VM may be performed by a VM kernel. The mapping is performed according to a defined scheduling policy, for example, round robin, or an application hinting mechanism. The scheduling policy may be defined by a user (e.g., using user interface 524), and/or predefined (e.g., by an administrator and/or as a default setting of the software). The scheduling policy may be selected for the computational environment to further improve computational performance.

In order to limit available cluster for VM application, a defined kernel command line parameter *bank-cluster-bits* may be provided for the VM kernel. The VM kernel may allocate clusters to the applications based on the defined scheduling policy. Different VMs are allocated to different clusters in order to avoid applications from different VMs disturbing each other and/or causing memory contention.

The same location of bits indicative of the clusters of banks may be selected from the guest physical addresses used by the common VM that are used by the host OS from the actual physical addresses.

Optionally, the cluster mapping is denoted by the host and guest OS based on the bank coloring bits in the Linux buddy allocator implemented by the BPM method.

VM 516A may be allocated with a maximum number of available clusters using an implemented bank-cluster-bits kernel command line parameter which sets the maximum number of memory banks available for the VM, which denotes the maximum number of applications that may be mapped on different memory banks of DRAM 508.

At 404, hypervisor code 522 may execute a second (or greater number of) common VM 516B, which runs one or more applications (e.g., 514C-D).

It is noted that the host OS is instructed to allocate two or more clusters to each executing VM 516A-B. The two or more designated clusters provide for execution of two or more applications on each VM, where each application is allocated at least one cluster for exclusive use.

Two exemplary control mechanisms may be used for controlling the VM's 516A cluster usage. A first control mechanism is used to provide the guest kernel with the maximum number of clusters to use for the running application. A second control mechanism is used in the hypervisor side in order to enforce and limit cluster usage of the VM. The control mechanisms may be implemented as follows:
^{∗} Bank-cluster-bits guest kernel command line parameter: Instructs the guest kernel what cluster queues the buddy allocators should use inside the VM for the applications. These are clusters that the hypervisor enforces and/or supports for the respective VM. When the VM decides to use another cluster than the specified bank-cluster-bits (for example, due to a kernel bug), the hypervisor is instructed to select a default cluster queue for the faulting guest physical address.
^{∗} Clusters: The guest OS is provided with the assigned clusters, optionally using a defined *bank-cluster-bits* kernel command line parameter. In *Qemu* the *bank-cluster-bits* command line parameter is provided as an extension to the *-append Qemu* option. The option in *Qemu* instructs the clusters allocated for the whole VM, and is communicated via a *IOTCL BANK_COLOR* call to *KVM* hypervisor. *KVM* stores cluster information to *KVM* struck which includes also *VM ID* information.

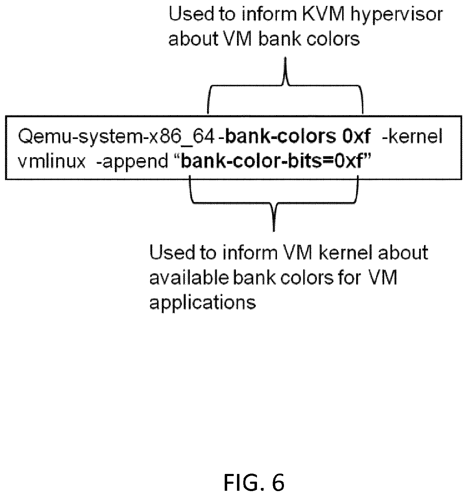

Reference is now made to FIG. 6, which is a schematic depicting the described Qemu/KVM command line options, in accordance with some embodiments of the present invention.

The defined *Qemu* option *bank-clusters* sets the upper bound for the overall memory banks available for all the applications that run on each VM. Applications running on each VM cannot be assigned more memory banks than the value set by the upper bound to the VM.

At 406, another group of clusters banks of the DRAM 508 is allocated to second VM 516B running on the host OS of the host computing device 502. Different VM are allocated to different clusters, such that memory contentions between applications running on different VM is reduced or prevented. For example, the group of clusters 510B-C are allocated to second VM 516B, with cluster 510A allocated to the first VM 516A. Each VM may independently perform mapping of its assigned clusters to the applications running on the respective VM, which improves overall memory performance and/or computational performance.

The second VM 516B maps each member of the group of clusters 510B-C to the applications executing on the second VM 516B. Each member of the group of clusters defines banks of the DRAM for exclusive use by each mapped application executing on the second VM 516B. For example, cluster 510B (i.e., banks 512C-D) is mapped to application 514C running on second VM 516B, and clusters 510C (i.e., banks 512E-F) is mapped to application 514D running on second VM 516B.

Clusters of banks of the DRAM are uniquely mapped to each application executing on each VM running on the host OS of the host computing device. Each application executing on each VM has exclusive use of the mapped cluster. The unique assignment of clusters to each application of each VM prevents or reduces memory contention between applications of the same VM and applications of different VM.

When multiple VMs are executed by a common host computing device, applications from different VMs are set to use different clusters. Each VM is set with non-overlapping bank cluster bits, for example, using a defined Guest OS kernel command line parameter (e.g., *bank-cluster-bits*) and *Qemu bank-clusters* - option.

The hypervisor 522 includes code to support designation of different clusters of banks 510A-C to different applications running on each VM 516A-B, which may be implemented as described in the following exemplary implementation: In the VM creation phase, the defined *Qemu bank-clusters* denotes the available clusters of banks for the VM process considered in its entirety (that includes applications running on the VM). The available clusters of banks are provided to the KVM hypervisor using a defined *IOCTL BANK_CLUSTER* call. The hypervisor stores the bank cluster data in a *KVM struct* or in *VCPU struct* for the threads.

At 408, a virtual memory page fault associated with a certain application (e.g., 514A or 514B) executing on common VM 516A is handled.

Based on the above described exemplary implementation, in case of page fault due to the guest physical address the second level page fault handler at first reads *VM ID* in order to associate the faulting *VM* to the associated *KVM* struct. Depending on the processor architecture, the *VM IS* may be read from VTTRB register. The obtained *VM ID* may be used against the *KVM*/*VCPU struct* which also includes the *VM ID* to check the cluster bits for the *VM.*

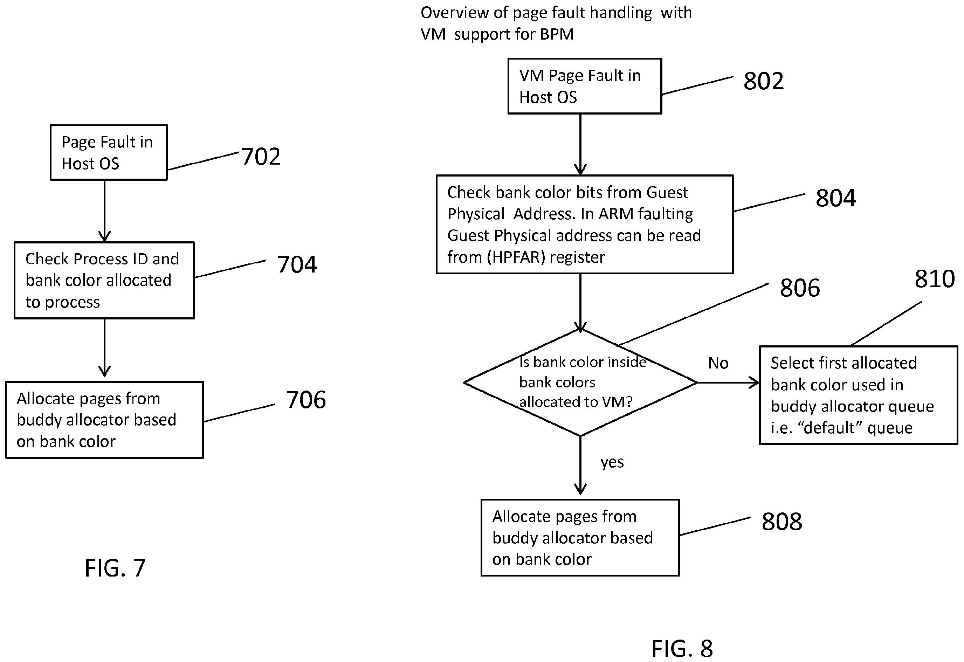

Reference is now made to FIG. 7, which is a flowchart depicting page fault handing using other methods that do not consider applications executing on a VM, for example, the BPM method, to help understand implementations of the present invention.

At 702, a page fault is detected by the host OS. The page fault occurs when a process attempts to allocate more memory than the host OS allocated to the process using bank colors, for example, from the process structure such as process *task-struct.*

At 704, the process ID and bank color allocated to the process is checked.

At 706, the process ID and bank color are provided to the buddy allocator for allocation of memory pages from the allocated bank queues based on bank color. When other methods (e.g., BPM method) are implemented, the second level page fault handler requests a page from the buddy allocator without a specific policy. The buddy allocator simply returns the first available page with the right size from the freelist.

Reference is now made to FIG. 8, which is a flowchart depicting page fault handling by computing device 502, which takes into account applications running on VMs, in accordance with some embodiments of the present invention. The host OS includes code instructions for selection of clusters from the guest physical addresses after a second level page fault is detected. Clusters selected at the VM side are enforceable at the hypervisor side. Cluster selection is performed at the VM side using clusters assigned to the application, which allows the hypervisor side to figure out the desired cluster from the faulting guest physical address and associated cluster bits.

At 802, a virtual memory page fault associated with a certain application (e.g., 514A or 514B) executing on common VM 516A, is detected by the host OS of computing device 502. The application running on the VM causes the page fault by accessing a certain guest physical address that does not have a mapping to an actual physical address in second level page tables for the VM.

At 804, the cluster of banks mapped to the certain application associated with the virtual memory page fault is identified. The cluster of banks mapped to the certain application are identified by checking the bits indicative of the cluster of banks in the guest physical address.

The cluster of banks mapped to the certain application may be identified by checking the Faulting Guest Physical Address Register, for example, HPFAR register, CR2 register, and/or CR3 register. The bits of the guest physical address and/or the registers may be accessed by the hypervisor to determine the guest physical address and associated cluster.

At 806, an evaluation is performed to determine whether there are sufficient banks remaining within the cluster allocated to the VM running the certain application that caused the virtual memory page fault.

Alternatively or additionally, the evaluation determines when an invalid cluster of banks is identified as mapped to the certain application.

At 808, the evaluation determines that there are sufficient banks remaining, and/or that the cluster of banks mapped to the certain application is valid. At least one additional physical memory page is allocated to the certain application from the mapped cluster of banks.

Alternatively, at 810, there are insufficient banks remaining and/or the cluster of banks mapped to the certain application is invalid. At least one additional virtual memory page is allocated to the certain application from default clusters of banks allocated to the common VM. For example, the host OS directs the applications to a default buddy allocator queue selected by the host OS kernel for the VM.

The following is an exemplary code from Palloc framework for selecting pages based on bank bits. The pseudocode below implements the flowchart depicted in FIG. 8:

```
 static inline int page_to_color(struct page ∗page)
          {
         int bank color = 0;
         int idx = 0;
         int c;
         unsigned long paddr = page to phys(page);
         for_each_set_bit(c, &sysctl_palloc_mask, sizeof(unsigned long) ∗8) {
                  if (use_mc_xor) {
                          if (((paddr >> c) & 0x1) ^ ((paddr >> mc_xor_bits[c]) & 0x1))
                                  bank_color |= (1<<idx);
                  } else {
                          if ((paddr >> c) & 0x1)
                  } bank_color |= (1<<idx);
                  idx++;
         }
         return bank_color;
         }
         If bank color = {allocated VM colors} then get pages from buddy allocator here buddy
         allocator color = bank color
         If bank_color ∉ {allocated VM colors} then get pages from buddy allocator here buddy
         allocator color = DEFAULT COLOR
```

In the Palloc algorithm above the user defines sysctl_palloc_mask - bitmask which is used to select pages that match with the given mask. The use _mc_xor - flag is used to indicate whether memory controller uses xor method to select bank bits from the physical address.

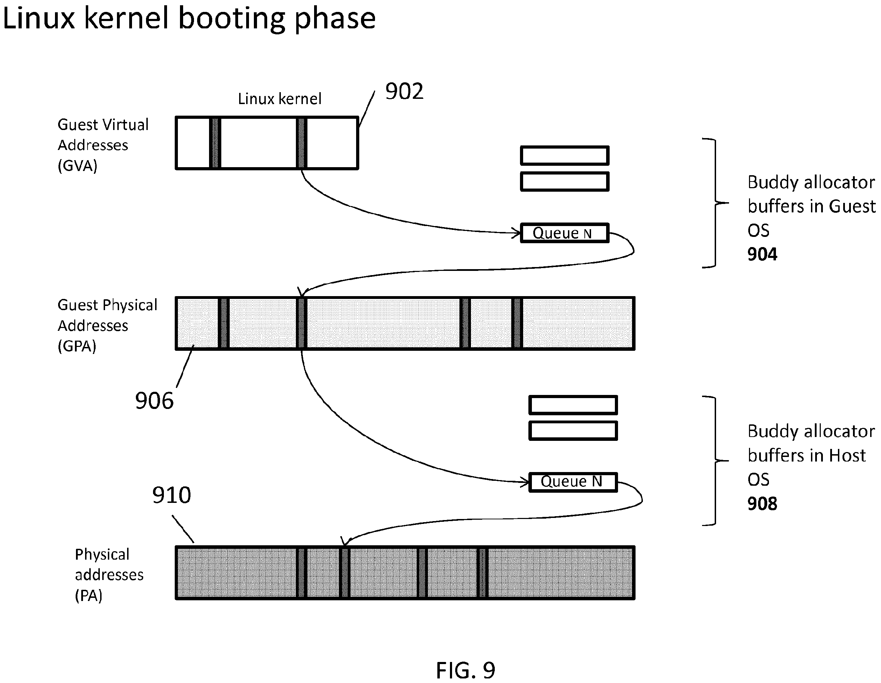

Reference is now made to FIG. 9, which is a schematic depicting an exemplary mapping between guest virtual addresses and physical addresses during a Linux kernel booting phase, in accordance with some embodiments of the present invention. Guest virtual addresses of a Linux kernel 902 are placed in a buddy allocator that allocates buffers 904 of the guest OS. Each buffer 904 maps to a guest physical address 906. The guest physical addresses 906 map to a buddy allocator that allocates buffers 908 of the Host OS. Each buffer 908 maps to physical address(es) 910.

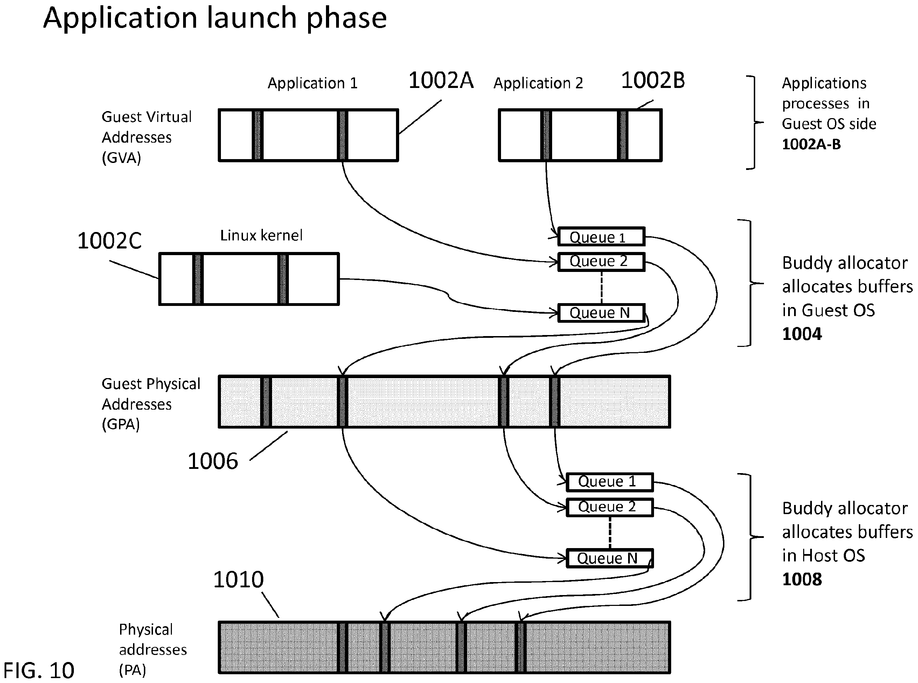

Reference is now made to FIG. 10, which is a schematic depicting a mapping between guest virtual addresses of a guest virtual address page and physical addresses during an application launch phase, in accordance with the present invention. The guest physical addresses of a guest physical address page of applications 1002A-B and linux kernel 1002C, which are running on a common VM, are placed in respective queues 1004 of a buddy allocator that allocates buffers in the guest OS. Each queue 1004 is mapped to a respective guest physical address 1006. The Guest OS maps guest applications 1002A-B of different buddy allocator queues 1004 based on clustering assigned to the guest OS side. The guest physical addresses 1006 are placed in respective buffers 1008 of a buddy allocator that allocates buffers 1008 of the host OS. Each buffer 1008 is mapped to a respective physical address 1010.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

It is expected that during the life of a patent maturing from this application many relevant DRAM, memory controller, and virtual machines will be developed and the scope of the terms DRAM, memory controller, and virtual machine are intended to include all such new technologies a priori.

As used herein the term "about" refers to ± 10 %.

The terms "comprises", "comprising", "includes", "including", "having" and their conjugates mean "including but not limited to". This term encompasses the terms "consisting of' and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. An apparatus (502) for managing dynamic random access memory, DRAM, (508), the apparatus comprising a processor (518) configured for:
mapping each application of a plurality of applications (514A-B) executing on a common virtual machine, VM, (516A) running on a host operating system, OS, of a host computing device (502) to one or more clusters of a plurality of clusters (510A-C) of banks (512A-F) of the DRAM (508), wherein each application exclusively uses the mapped one or more clusters of banks;
**characterised in that** the mapping individual applications executing on a common virtual machine to one or more clusters of a plurality of clusters comprises:
placing guest physical addresses of a guest physical address page of the individual applications and a Linux kernel, executing on the common VM, in respective queues of a buddy allocator that allocates buffers in the guest operating system, OS, wherein each queue is mapped to a respective guest physical address and wherein the guest OS maps guest applications of different buddy allocator queues based on clusters assigned to the guest OS; and
placing guest physical addresses in respective buffers of a buddy allocator that allocates buffers of the host OS, wherein each buffer is mapped to a respective physical address of the DRAM.

2. The apparatus (502) according to claim 1, wherein the processor (518) is configured to execute a hypervisor (522) that runs the common VM (516A), wherein the hypervisor (522) is configured to perform the mapping of each cluster of the plurality of clusters (510A-C) of banks (512A-F) of the DRAM (508) by translating the mapping of each cluster of the plurality of clusters (510A-C) of the DRAM (508) to physical addresses that are provided to a memory controller (506) controlling the DRAM (508).

3. The apparatus (502) according to claim 2, wherein the hypervisor (522) is configured to map guest physical addresses used by the hypervisor (522) to physical addresses of the DRAM (508) controlled by the memory controller (506).

4. The apparatus (502) according to any of the previous claims, wherein the processor (518) is further configured to:
allocate another group of clusters of the plurality of clusters (510A-C) of banks (512A-F) of the DRAM (508) to a second VM running (516B) on the host OS of the host computing device (502),
wherein the second VM (516B) maps each member of the group of clusters to each application of a plurality of applications (514C-D) executing on the second VM (516B), wherein each member of the group of clusters defines banks of the DRAM (508) for exclusive use by each mapped application executing on the second VM (516B).

5. The apparatus (502) according to any of the previous claims, wherein the processor (518) is configured to uniquely map clusters (510A-C) of banks (512A-F) of the DRAM (508) to each application of a plurality of applications (514A-D) executing on each VM of a plurality of VM (516A-B) running on the host OS of the host computing device (502), wherein each application executing on each VM of the plurality of VM has exclusive use of the mapped cluster.

6. The apparatus (502) according to any of the previous claims, wherein the processor (518) is configured to map clusters (510A-C) of banks (512A-F) to applications (514A-B) of the VM (516A) according to a scheduling policy.

7. The apparatus (502) according to any of the previous claims, wherein the processor (518) is configured to select the same location of bits indicative of the clusters (510A-C) of banks (512A-F) from the guest physical addresses used by the common VM (516A) that are used by the host OS from the actual physical addresses.

8. The apparatus (502) according to any of the previous claims, wherein the processor (518) is configured to:
detect, by the host OS, a virtual memory page fault associated with a certain application of the plurality of applications (5145A-B) executing on the common VM (516A),
identify the cluster of banks mapped to the certain application, and
allocate at least one additional physical memory page to the certain application from the mapped cluster of banks.

9. The apparatus (502) according to claim 8, wherein the processor (518) is configured to:
allocate at least one additional virtual memory page to the certain application from one of a plurality of default clusters of banks allocated to the common VM (516A) when an invalid cluster of banks is identified as mapped to the certain application.

10. The apparatus (502) according to claim 8 or 9, wherein the cluster of banks mapped to the certain application is identified by checking the bits indicative of the cluster of banks in the guest physical address.

11. The apparatus (502) according to claim 8 or 9, wherein the cluster of banks mapped to the certain application is identified by checking at least one of: HPFAR register, CR2 register, and CR3 register.

12. The apparatus (502) according to any of the previous claims, wherein at least one application of the plurality of applications (514A-B) is mapped to a plurality of clusters (510A-C) of banks (512A-F) of the DRAM (508), wherein the plurality of clusters (510A-C) of banks (512A-F) are used exclusively by the mapped at least one application.

13. A method of managing dynamic random access memory, DRAM, the method comprising:
mapping each application of a plurality of applications (514A-B) executing on a common virtual machine, VM, (516A) running on a host operating system, OS, of a host computing device (502) to one or more clusters of a plurality of clusters (510A-C) of banks (512A-F) of the DRAM (508), wherein each application exclusively uses the mapped one or more clusters of banks;
**characterised in that** the mapping individual applications executing on a common virtual machine to one or more clusters of a plurality of clusters comprises:
placing guest physical addresses of a guest physical address page of the individual applications and a Linux kernel, executing on the common VM, in respective queues of a buddy allocator that allocates buffers in the guest operating system, OS, wherein each queue is mapped to a respective guest physical address and wherein the guest OS maps guest applications of different buddy allocator queues based on clusters assigned to the guest OS; and
placing guest physical addresses in respective buffers of a buddy allocator that allocates buffers of the host OS, wherein each buffer is mapped to a respective physical address of the DRAM.

14. The method according to claim 13, wherein the mapping comprises mapping guest physical addresses used by a hypervisor hosting the common VM to physical addresses of the DRAM controlled by a memory controller.

## Patentansprüche

1. Vorrichtung (502) zum Verwalten eines dynamischen Direktzugriffsspeichers, DRAM (508), wobei die Vorrichtung einen Prozessor (518) umfasst, der zu Folgendem konfiguriert ist:
Zuordnen jeder Anwendung einer Vielzahl von Anwendungen (514A-B), die auf einer gemeinsamen virtuellen Maschine, VM, (516A) ausgeführt wird, welche auf einem Host-Betriebssystem, OS, einer Host-Rechenvorrichtung (502) läuft, zu einem oder mehreren Clustern einer Vielzahl von Clustern (510A-C) von Bänken (512A-F) des DRAM (508), wobei jede Anwendung ausschließlich den/die zugeordneten einen oder mehreren Cluster von Bänken verwendet;
**dadurch gekennzeichnet, dass**
das Zuordnen einzelner Anwendungen, die auf einer gemeinsamen virtuellen Maschine ausgeführt werden, zu
einem oder mehreren Clustern einer Vielzahl von Clustern Folgendes umfasst:
Platzieren von physischen Gastadressen einer physischen Gastadressenseite der einzelnen Anwendungen und eines Linux-Kernels, der auf der gemeinsamen VM ausgeführt wird, in entsprechenden Warteschlangen eines Buddy-Zuteilers, der Puffer im Gastbetriebssystem, OS, zuteilt, wobei jede Warteschlange einer jeweiligen physischen Gastadresse zugeordnet wird und wobei das Gast-OS Gastanwendungen verschiedener Buddy-Zuteilerwarteschlangen basierend auf dem Gast-OS zugewiesenen Clustern zuordnet; und
Platzieren von physischen Gastadressen in entsprechenden Puffern eines Buddy-Zuteilers, der Puffer des Host-OS zuteilt, wobei jeder Puffer einer jeweiligen physischen Adresse des DRAM zugeordnet wird.

2. Vorrichtung (502) nach Anspruch 1, wobei der Prozessor (518) dazu konfiguriert ist, einen
Hypervisor (522) auszuführen, auf dem die gemeinsame VM (516A) läuft, wobei der Hypervisor (522) dazu konfiguriert ist, die Zuordnung jedes Clusters der Vielzahl von Clustern (510A-C) von Bänken (512A-F) des DRAM (508) durchzuführen, indem die Zuordnung jedes Clusters der Vielzahl von Clustern (510A-C) des DRAM (508) zu physischen Adressen übersetzt wird, die einer Speichersteuerung (506) bereitgestellt werden, welche den DRAM (508) steuert.

3. Vorrichtung (502) nach Anspruch 2, wobei der Hypervisor (522) dazu konfiguriert ist, durch den Hypervisor (522) verwendete physische Gastadressen zu physischen Adressen des DRAM (508) zuzuordnen, der durch die Speichersteuerung (506) gesteuert wird.

4. Vorrichtung (502) nach einem der vorhergehenden Ansprüche, wobei der Prozessor (518) ferner zu Folgendem konfiguriert ist:
Zuteilen einer anderen Gruppe von Clustern der Vielzahl von Clustern (510A-C) von Bänken (512A-F) des DRAM (508) zu einer zweiten VM (516B), die auf dem Host-OS der Host-Rechenvorrichtung (502) läuft,
wobei die zweite VM (516B) jedes Element der Gruppe von Clustern zu jeder Anwendung einer Vielzahl von Anwendungen (514C-D) zuordnet, die auf der zweiten VM (516B) ausgeführt wird, wobei jedes Element der Gruppe von Clustern Bänke des DRAM (508) zur exklusiven Verwendung durch jede zugeordnete Anwendung definiert, die auf der zweiten VM (516B) ausgeführt wird.

5. Vorrichtung (502) nach einem der vorhergehenden Ansprüche, wobei der Prozessor (518) dazu konfiguriert ist, Cluster (510A-C) von Bänken (512A-F) des DRAM (508) eindeutig zu jeder Anwendung einer Vielzahl von Anwendungen (514A-D) zuzuordnen, die auf jeder VM einer Vielzahl von VM (516A-B) ausgeführt wird, welche auf dem Host-OS der Host-Rechenvorrichtung (502) läuft, wobei jede Anwendung, die auf jeder VM der Vielzahl von VM ausgeführt wird, die ausschließliche Verwendung der zugeordneten Cluster aufweist.

6. Vorrichtung (502) nach einem der vorhergehenden Ansprüche, wobei der Prozessor (518) dazu konfiguriert ist, Cluster (510A-C) von Bänken (512A-F) zu Anwendungen (514A-B) der VM (516A) gemäß einer Planungsrichtlinie zuzuordnen.

7. Vorrichtung (502) nach einem der vorhergehenden Ansprüche, wobei der Prozessor (518) dazu konfiguriert ist, dieselbe Position von Bits, welche die Cluster (510A-C) von Bänken (512A-F) angeben, aus den durch die gemeinsame VM (516A) verwendeten physischen Gastadressen auszuwählen, die durch das Host-OS aus den tatsächlichen physischen Adressen verwendet werden.

8. Vorrichtung (502) nach einem der vorhergehenden Ansprüche, wobei der Prozessor (518) zu Folgendem konfiguriert ist:
Erkennen eines Seitenfehlers des virtuellen Speichers durch das Host-OS, der mit einer bestimmten Anwendung der Vielzahl von Anwendungen (5145A-B) assoziiert ist, die auf der gemeinsamen VM (516A) ausgeführt wird,
Identifizieren des Clusters von Bänken, welcher der bestimmten Anwendung zugeordnet ist, und
Zuteilen mindestens einer zusätzlichen physischen Speicherseite zu der bestimmten Anwendung aus dem zugeordneten Cluster von Bänken.

9. Vorrichtung (502) nach Anspruch 8, wobei der Prozessor (518) zu Folgendem konfiguriert ist:
Zuteilen mindestens einer zusätzlichen virtuellen Speicherseite zu der bestimmten Anwendung aus einem einer Vielzahl von Standardclustern von Bänken, die der gemeinsamen VM (516A) zugeteilt sind, wenn ein ungültiger Cluster von Bänken als der bestimmten Anwendung zugeordnet identifiziert wird.

10. Vorrichtung (502) nach Anspruch 8 oder 9, wobei der Cluster von Bänken, welcher der bestimmten Anwendung zugeordnet ist, durch Prüfen der Bits identifiziert wird, die den Cluster von Bänken in der physischen Gastadresse angeben.

11. Vorrichtung (502) nach Anspruch 8 oder 9, wobei der Cluster von Bänken, welcher der bestimmten Anwendung zugeordnet ist, durch Prüfen mindestens eines von Folgendem identifiziert wird: HPFAR-Register, CR2-Register und CR3-Register.

12. Vorrichtung (502) nach einem der vorhergehenden Ansprüche, wobei mindestens eine Anwendung der Vielzahl von Anwendungen (514A-B) einer Vielzahl von Clustern (510A-C) von Bänken (512A-F) des DRAM (508) zugeordnet ist, wobei die Vielzahl von Clustern (510A-C) von Bänken (512A-F) ausschließlich durch die zugeordnete mindestens eine Anwendung verwendet wird.

13. Verfahren zum Verwalten eines dynamischen Direktzugriffsspeichers, DRAM, wobei das Verfahren Folgendes umfasst:
Zuordnen jeder Anwendung einer Vielzahl von Anwendungen (514A-B), die auf einer gemeinsamen virtuellen Maschine, VM, (516A) ausgeführt wird, welche auf einem Host-Betriebssystem, OS, einer Host-Rechenvorrichtung (502) läuft, zu einem oder mehreren Clustern einer Vielzahl von Clustern (510A-C) von Bänken (512A-F) des DRAM (508), wobei jede Anwendung ausschließlich den/die zugeordneten einen oder mehreren Cluster von Bänken verwendet;
**dadurch gekennzeichnet, dass**
das Zuordnen einzelner Anwendungen, die auf einer gemeinsamen virtuellen Maschine ausgeführt werden, zu
einem oder mehreren Clustern einer Vielzahl von Clustern Folgendes umfasst:
Platzieren von physischen Gastadressen einer physischen Gastadressenseite der einzelnen Anwendungen und eines Linux-Kernels, der auf der gemeinsamen VM ausgeführt wird, in entsprechenden Warteschlangen eines Buddy-Zuteilers, der Puffer im Gastbetriebssystem, OS, zuteilt, wobei jede Warteschlange einer jeweiligen physischen Gastadresse zugeordnet wird und wobei das Gast-OS Gastanwendungen verschiedener Buddy-Zuteilerwarteschlangen basierend auf dem Gast-OS zugewiesenen Clustern zuordnet; und
Platzieren von physischen Gastadressen in entsprechenden Puffern eines Buddy-Zuteilers, der Puffer des Host-OS zuteilt, wobei jeder Puffer einer jeweiligen physischen Adresse des DRAM zugeordnet wird.

14. Verfahren nach Anspruch 13, wobei das Zuordnen das Zuordnen von physischen Gastadressen, die durch einen Hypervisor verwendet werden, der die gemeinsame VM hostet, zu physischen Adressen des DRAM, der durch eine Speichersteuerung gesteuert wird, umfasst.

## Revendications

1. Appareil (502) destiné à la gestion de mémoire dynamique à accès aléatoire, DRAM, (508), l'appareil comprenant un processeur (518) configuré pour :
mapper chaque application d'une pluralité d'applications (514A-B) s'exécutant sur une machine virtuelle commune, VM, (516A) fonctionnant sur un système d'exploitation hôte, OS, d'un dispositif informatique hôte (502) à une ou à plusieurs grappes d'une pluralité de grappes (510A-C) de blocs (512A-F) de la DRAM (508), dans lequel chaque application utilise exclusivement les une ou plusieurs grappes de blocs mappées ;
**caractérisé en ce que**
le mappage d'applications individuelles s'exécutant sur une machine virtuelle commune à une ou à plusieurs grappes d'une pluralité de grappes comprend :
le placement d'adresses physiques invitées d'une page d'adresse physique invitée des applications individuelles et d'un noyau Linux, s'exécutant sur la VM commune, dans des files d'attente respectives d'un allocateur d'amis qui alloue des mémoires tampon dans le système d'exploitation invité, OS, dans lequel chaque file d'attente est mappée à une adresse physique invitée respective et dans lequel l'OS invité mappe les applications invitées de différentes files d'attente d'allocateur d'amis sur la base de grappes attribuées à l'OS invité ; et
le placement d'adresses physiques invitées dans des mémoires tampon respectives d'un allocateur d'amis qui alloue des mémoires tampon de l'OS hôte, dans lequel chaque mémoire tampon est mappée à une adresse physique respective de la DRAM.

2. Appareil (502) selon la revendication 1, dans lequel le processeur (518) est configuré pour exécuter un hyperviseur (522) qui exécute la VM commune (516A), dans lequel l'hyperviseur (522) est configuré pour effectuer le mappage de chaque grappe de la pluralité de grappes (510A-C) de blocs (512A-F) de la DRAM (508) en traduisant le mappage de chaque grappe de la pluralité de grappes (510A-C) de la DRAM (508) en adresses physiques qui sont fournies à un dispositif de commande de mémoire (506) commandant la DRAM (508).

3. Appareil (502) selon la revendication 2, dans lequel l'hyperviseur (522) est configuré pour mapper des adresses physiques invitées utilisées par l'hyperviseur (522) aux adresses physiques de la DRAM (508) commandée par le dispositif de commande de mémoire (506).

4. Appareil (502) selon l'une quelconque des revendications précédentes, dans lequel le processeur (518) est en outre configuré pour :
allouer un autre groupe de grappes de la pluralité de grappes (510A-C) de blocs (512A-F) de la DRAM (508) à une seconde VM fonctionnant (516B) sur l'OS hôte du dispositif informatique hôte (502),
dans lequel la seconde VM (516B) mappe chaque membre du groupe de grappes à chaque application d'une pluralité d'applications (514C-D) s'exécutant sur la seconde VM (516B), dans lequel chaque membre du groupe de grappes définit des blocs de la DRAM (508) pour une utilisation exclusive par chaque application mappée s'exécutant sur la seconde VM (516B).

5. Appareil (502) selon l'une quelconque des revendications précédentes, dans lequel le processeur (518) est configuré pour mapper de manière unique des grappes (510A-C) de blocs (512A-F) de la DRAM (508) à chaque application d'une pluralité d'applications (514A-D) s'exécutant sur chaque VM d'une pluralité de VM (516A-B) fonctionnant sur l'OS hôte du dispositif informatique hôte (502), dans lequel chaque application s'exécutant sur chaque VM de la pluralité de VM a l'utilisation exclusive de la grappe mappée.

6. Appareil (502) selon l'une quelconque des revendications précédentes, dans lequel le processeur (518) est configuré pour mapper des grappes (510A-C) de blocs (512A-F) aux applications (514A-B) de la VM (516A) en fonction d'une politique de planification.

7. Appareil (502) selon l'une quelconque des revendications précédentes, dans lequel le processeur (518) est configuré pour sélectionner le même emplacement de bits indicatifs des groupes (510A-C) de blocs (512A-F) à partir des adresses physiques invitées utilisées par la VM commune (516A) qui sont utilisées par l'OS hôte à partir des adresses physiques réelles.

8. Appareil (502) selon l'une quelconque des revendications précédentes, dans lequel le processeur (518) est configuré pour :
détecter, par l'OS hôte, un défaut de page de mémoire virtuelle associé à une certaine application de la pluralité d'applications (5145A-B) s'exécutant sur la VM commune (516A), identifier la grappe de blocs mappée à ladite application, et
allouer au moins une page de mémoire physique supplémentaire à ladite application à partir de la grappe de blocs mappée.

9. Appareil (502) selon la revendication 8, dans lequel le processeur (518) est configuré pour :
allouer au moins une page de mémoire virtuelle supplémentaire à ladite application à partir de l'une d'une pluralité de grappes de blocs par défaut allouées à la VM commune (516A) lorsqu'une grappe de blocs invalide est identifiée comme étant mappée à ladite application.

10. Appareil (502) selon la revendication 8 ou 9, dans lequel la grappe de blocs mappée à ladite application est identifiée en vérifiant les bits indicatifs de la grappe de blocs dans l'adresse physique invitée.

11. Appareil (502) selon la revendication 8 ou 9, dans lequel la grappe de blocs mappée à ladite application est identifiée par la vérification d'au moins l'un : d'un registre HPFAR, d'un registre CR2 et d'un registre CR3.

12. Appareil (502) selon l'une quelconque des revendications précédentes, dans lequel au moins une application de la pluralité d'applications (514A-B) est mappée à une pluralité de grappes (510A-C) de blocs (512A-F) de la DRAM (508), dans lequel la pluralité de grappes (510A-C) de blocs (512A-F) sont utilisées exclusivement par l'au moins une application mappée.

13. Procédé de gestion de mémoire dynamique à accès aléatoire, DRAM, le procédé comprenant :
le mappage de chaque application d'une pluralité d'applications (514A-B) s'exécutant sur une machine virtuelle commune, VM, (516A) fonctionnant sur un système d'exploitation hôte, OS, d'un dispositif informatique hôte (502) à une ou à plusieurs grappes d'une pluralité de grappes (510A-C) de blocs (512A-F) de la DRAM (508), dans lequel chaque application utilise exclusivement les une ou plusieurs grappes de blocs mappées ;
**caractérisé en ce que**
le mappage d'applications individuelles s'exécutant sur une machine virtuelle commune à une ou à plusieurs grappes d'une pluralité de grappes comprend :
le placement d'adresses physiques invitées d'une page d'adresse physique invitée des applications individuelles et d'un noyau Linux, s'exécutant sur la VM commune, dans des files d'attente respectives d'un allocateur d'amis qui alloue des mémoires tampon dans le système d'exploitation invité, OS, dans lequel chaque file d'attente est mappée à une adresse physique invitée respective et dans lequel l'OS invité mappe les applications invitées de différentes files d'attente d'allocateur d'amis sur la base de grappes attribuées à l'OS invité ; et
le placement d'adresses physiques invitées dans des mémoires tampon respectives d'un allocateur d'amis qui alloue des mémoires tampon de l'OS hôte, dans lequel chaque mémoire tampon est mappée à une adresse physique respective de la DRAM.

14. Procédé selon la revendication 13, dans lequel le mappage comprend le mappage des adresses physiques invitées utilisées par un hyperviseur hébergeant la VM commune aux adresses physiques de la DRAM commandée par un dispositif de commande de mémoire.
